# EUROPEAN PATENT APPLICATION

(11) **EP 4 480 636 A1**
(43) Date of publication of application: **25.12.2024**
(21) Application number: 24181867.3
(22) Date of filing: 13.06.2024
(51) Int. Cl.: B24C 1/08, B24C 1/10, B24C 3/32, B29C 64/40, B33Y 40/20

(54) **METHOD FOR REMOVING SUPPORT STRUCTURE**

(30) Priority: 20.06.2023 JP 2023100630
(71) Applicant: Sugino Machine Limited, Namerikawa City, Toyama 936-8577 (JP)
(72) Inventor: GARCIA, Ignacio, Namerikawa City, Toyama, 9368577 (JP); MATSUI, Taiki, Namerikawa City, Toyama, 9368577 (JP)
(74) Representative: Global IP Europe Patentanwaltskanzlei

(57) **Abstract**

Removal of the support structure from the workpiece is in an easily automated way. A method for removing support structure includes: suspending abrasive (2) into a process liquid (1); cutting a support structure (3b) along a cutting surface (9) from an additively manufactured workpiece (3) having a support surface (3a), the support surface (3a) including the support structure (3b) for fixing the workpiece (3) to a build platform; installing the workpiece (3) with the support structure (3b) remaining on the support surface (3a) in the process liquid (1) with suspended abrasive (2); immersing a nozzle (15) for ejecting a cavitation jet (6) of the process liquid (1) into the process liquid (1); and ejecting the cavitation jet (6) onto the workpiece (3) from the nozzle (15) immersed in the process liquid (1) such that an angle between an ejection axis (15) of the cavitation jet (6) ejected from the nozzle (15) and the support surface (3a) is between 0 to 20 degrees to remove the remaining support structure (3b) adhered to the workpiece (3).

## Description

### BACKGROUND

### 1. Technical Field

The present invention relates to a method for removing a support structure. 2. Description of the Background

A support structure remains on a metal material produced by additive manufacturing. The support structure supports a workpiece to a build platform during additive manufacturing. The support structure is removed mainly by manual work or by cutting.

### BRIEF SUMMARY

Removal of the support structure from the metallic material requires experienced skill. Quality stability and production automation are required in the removal process of the support structure.

An object of the present invention is to remove the support structure from the workpiece in an easily automated manner.

A first aspect of the present invention provides a method for removing support structure, including:
suspending abrasive into a process liquid;
cutting a support structure along a cutting surface from an additively manufactured workpiece having a support surface, the support surface including the support structure for fixing the workpiece to a build platform;
installing the workpiece with the support structure remaining on the support surface in the process liquid with suspended abrasive;
immersing a nozzle for ejecting a cavitation jet of the process liquid into the process liquid; and
ejecting the cavitation jet onto the workpiece from the nozzle immersed in the process liquid such that an angle between an ejection axis of the cavitation jet ejected from the nozzle and the support surface is between 0 to 20 degrees to remove the remaining support structure adhered to the workpiece.

The structure of the support structure is, for example, a block support, an adaptive cell support, a rod support, a line support, a tree support.

When additive manufactured, the workpiece is built from the build platform, supported by the support structure. The workpiece is separated from the build platform by cutting the support structure. The support surface is, for example, a portion of the workpiece surface that adheres to the support structure. A distal end of the support structure is attached to the support surface. The distal end of the support structure remains on the support surface. For example, the support structure remains slightly from the support surface of the workpiece. Here, a slight value is, for example, a height in the order of 0.3 to 1 mm (including both ends).

The angle between the nozzle and the support surface is from 0 degrees to 20 degrees, preferably from 10 degrees to 20 degrees.

The process liquid is, for example, water. The process liquid may include a rust inhibitor.

The abrasive is abrasive particles. The abrasive is, for example, ceramic. The abrasive is, for example, alumina, garnet, or zirconia.

Simultaneously with the removal of the support structure, the support surface is smoothed.

The present invention allows to remove the support structure from the workpiece in an easily automated manner.

### BRIEF DESCRIPTION OF DRAWINGS

FIG. 1 is a flowchart showing a method for removing a support structure of a workpiece according to an embodiment.
FIG. 2 is a schematic view of the workpiece formed on a build platform according to the embodiment.
FIG. 3 is a schematic view of the workpiece separated from the build platform according to the embodiment.
FIG. 4 shows a support structure removing apparatus for workpiece according to the embodiment.
FIG. 5 shows photographs of the workpiece before and after removal of the support structure of a first example.
FIG. 6 shows photographs of the workpiece before and after removal of the support structure of a second example.

### DETAILED DESCRIPTION

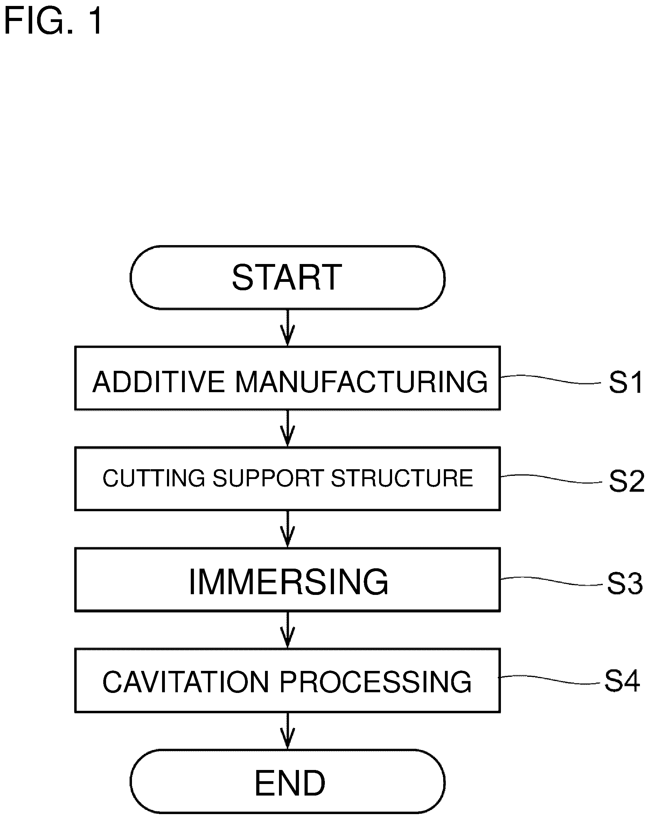

As shown in FIG. 1, in a method for removing a support structure for a workpiece according to the present embodiment, the workpiece 3 is additively manufactured first (step S1). Next, a support structure 3b of the workpiece 3 is cut (step S2). Next, the workpiece 3 and a nozzle 15 are immersed in a process liquid 1 containing abrasives 2 (step S3). A cavitation processing is then performed (step S4).

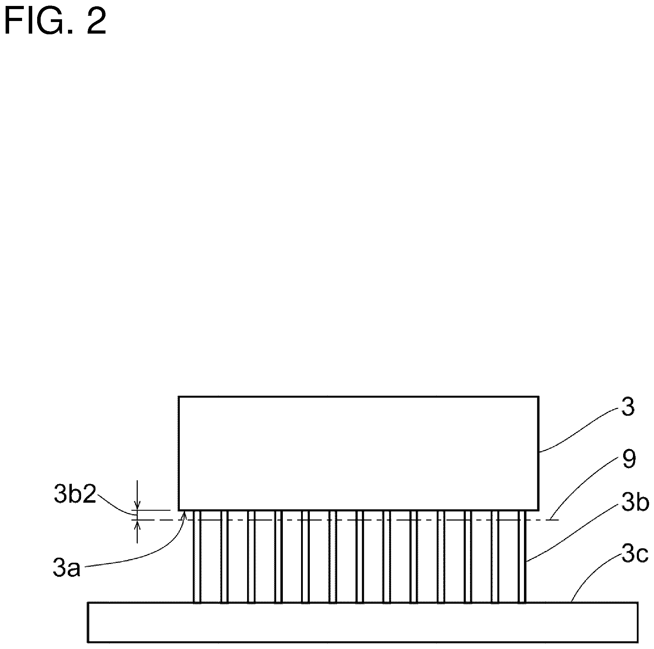

In step S1, for example, the additive manufacturing is performed by 3D printing. The 3D printing is, for example, powder bed fusion (PBF). The additively manufactured workpiece 3 has a tensile residual stress. As shown in FIG. 2, the additively manufactured workpiece 3 is supported on a build platform 3c by a number of support structures 3b.

In step S2, the support structure 3b is cut at a cut surface 9. This separates the workpiece 3 from the build platform 3c. Preferably, the cut surface 9 is in the vicinity of the workpiece 3. The workpiece 3 has a support surface 3a. A distal end of the support structure 3b is connected to the support surface 3a. The support surface 3a may be a curved surface.

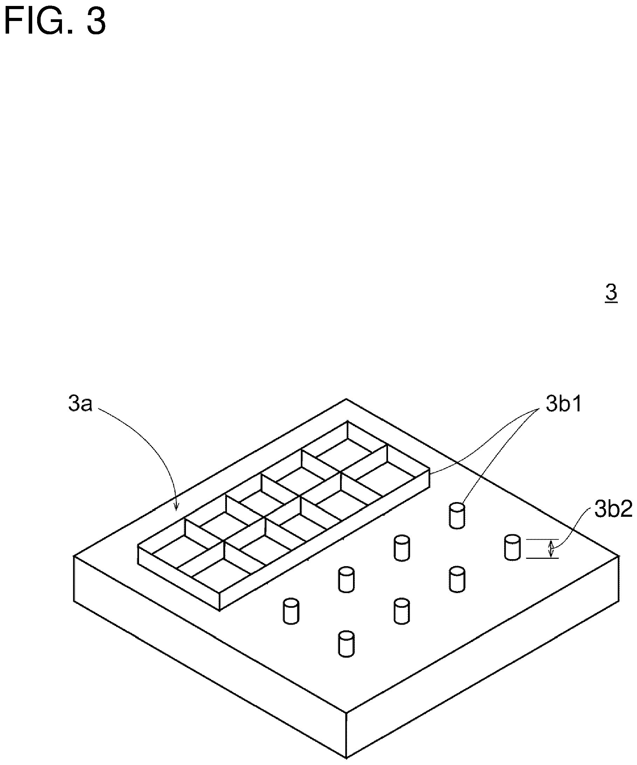

As shown in FIG. 3, a portion 3b1 of the support structure 3b adheres to the support surface 3a. A length of the support structure 3b varies depending on the shape of the workpiece 3 and the posture of the workpiece 3 formed on the build platform at the time of manufacturing. The length 3b2 of the support structure 3b 1 adhered to the workpiece 3 is, for example, 0.3 mm to 100 mm. Preferably, the length 3b2 of the support structure 3b1 is 0.3 mm to 20 mm, and more preferably 0.3 mm to 0.5 mm.

The support structure 3b may have a prismatic shape. The support structure 3b may be a block support, an adaptive cell support, a line support, or a tree support.

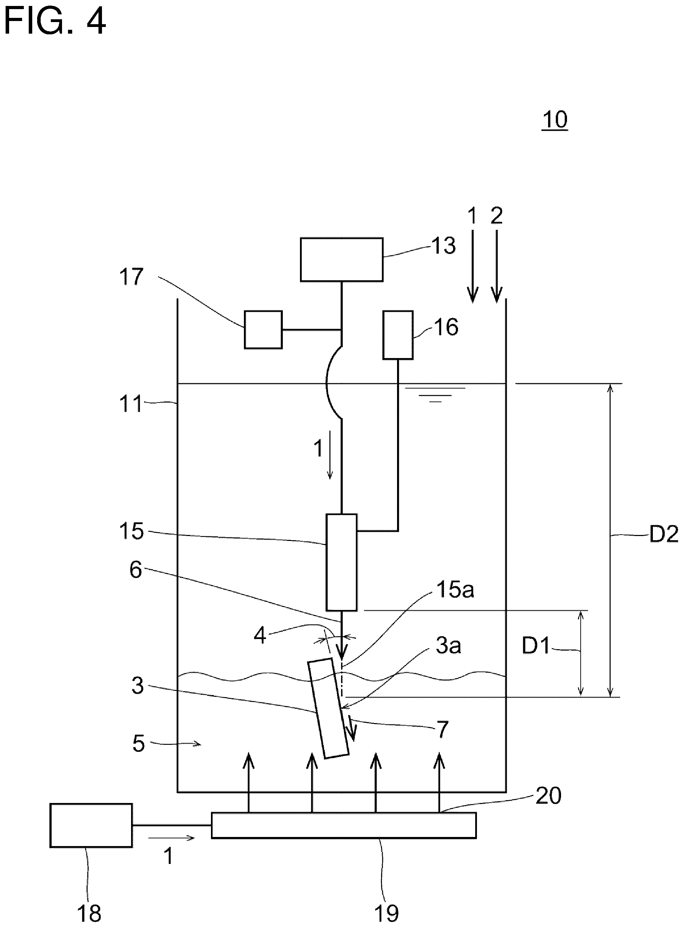

Next, a support structure removing apparatus 10 for the workpiece 3 will be described. As shown in FIG. 4, the support structure removing apparatus 10 includes a processing tank 11, a high-pressure process liquid source 13, a nozzle 15, a moving device 16, a pressure gauge 17, a stirring liquid source 18, a stirring block 19, and a stirring nozzle 20.

The processing tank 11 opens upward. The processing tank 11 stores the process liquid 1 and the abrasive 2. The high-pressure process liquid source 13 is, for example, a piston pump. The high-pressure process liquid source 13 pressurizes the process liquid 1 and supplies it to the nozzle 15.

The moving device 16 is, for example, a robot such as a vertical articulated robot, a horizontal articulated robot, an orthogonal axis robot, or a parallel link robot. The moving device 16 may be a spindle head moving device of a column traverse type machining center.

The nozzle 15, which is arranged in the moving device 16, is moved by the moving device 16. The nozzle 15 is immersed in the process liquid 1 stored in the processing tank 11. The nozzle 15 ejects the process liquid 1 along an ejection axis 15a. For example, the ejection axis 15a extends in a direction between a horizontal direction and a vertically downward direction (vertically downward in FIG. 4). Preferably, the nozzle 15 has a structure that generates a vortex between the process liquid 1 and a jet 6 to promote the generation of the cavity.

The pressure gauge 17 detects a discharge pressure from the high-pressure process liquid source 13.

The stirring liquid source 18 is, for example, a centrifugal pump or a diaphragm pump. The stirring block 19 is disposed at the bottom of the processing tank 11. The stirring block 19 is connected to the stirring liquid source 18. The stirring block 19 includes the stirring nozzle 20.

In step S3, the workpiece 3 is immersed in the process liquid 1 stored in the processing tank 11. The support surface 3a is installed toward the nozzle 15 (slightly inclined from vertical in FIG. 4). The support surface 3a may be arranged vertically, for example. The support surface 3a may be inclined from vertical. An angle 4 between the ejection axis 15a and the support surface 3a is, for example, 0 to 90 degrees, preferably 0 to 20 degrees, and more preferably 10 to 20 degrees. The support surface 3a is arranged obliquely or parallelly with respect to the ejection axis 15a, thereby promoting the removal of the support structure 3b1. Even if the support structure 3b1 is a strong support structure material such as a block support or an adaptive cell support, the support structure 3b1 can be effectively removed by setting the angle 4 to 0 to 20 degrees or 10 to 20 degrees.

In step S4, the stirring nozzle 20 ejects the process liquid 1 into the processing tank 11 to stir the abrasive 2. The abrasive 2 floats the processing tank 11 to become a turbid liquid 5. The workpiece 3 is in the turbid liquid 5. The nozzle 15 is immersed in the process liquid 1 to eject the process liquid 1. The jet 6 ejected from the nozzle 15 entrains the abrasive 2 and collides with the support surface 3a. As indicated by arrow 7, the jet 6 flows along the support surface 3a. At this time, the abrasive 2 also flows in the direction of the arrow 7. The support structural 3b1 is then removed. Further, the support surface 3a is smoothed. As the abrasive 2 flows in the vicinity of the support structure 3b1, the removal of the support structure 3b is promoted.

Note that the jet 6 collides with the vicinity of the base of the support structure 3b1 (the boundary between the support structure 3b1 and the workpiece 3) when the height 3b2 of the support structure 3b1 is high. At this time, the jet 6 with the abrasive 2 bends the support structure 3b1 from near the root. In addition, the jet 6 with abrasive 2 scrapes off the support structure 3b1 remaining on the support surface 3a.

The jet 6 ejected from the nozzle 15 promotes the generation of the cavity. The cavity is a fine bubble that is generated and disappears in a short time due to a pressure difference in a fluid flow. The cavity is introduced around the support surface 3a on the jet 6. When the cavity disappears, the fluid flows locally rapidly and impinges on the surface of the support surface 3a to be peening processed. When peening processing (hereinafter, cavitation peening) is performed by causing a cavitation jet to collide with the support surface 3a, residual compressive stresses are applied to the surface of the support surface 3a.

The support structure 3b1 remaining on the workpiece 3 is preferably removed. According to the present invention, the support structure 3b1 remaining on the workpiece 3 can be effectively removed.

In addition, there may be an incomplete melted region on the surface of the additively manufactured workpiece 3. According to the present invention, the surface of the workpiece 3 can be ground to remove the incomplete melted regions remaining on the support surface 3a.

According to the method for removing the support structure of the present embodiment, the support structure 3b1 can be effectively removed even when the workpiece 3 is in the form of a mesh. In addition, the support structure 3b1 disposed inside the workpiece 3 can be effectively removed.

The additive manufactured workpiece has a tensile compressive stress. It may be desirable to improve the fatigue strength of the additively manufactured workpiece. According to the present invention, as compressive residual stress is applied to the surface of the additively manufactured workpiece, fatigue strength is improved.

### First Example

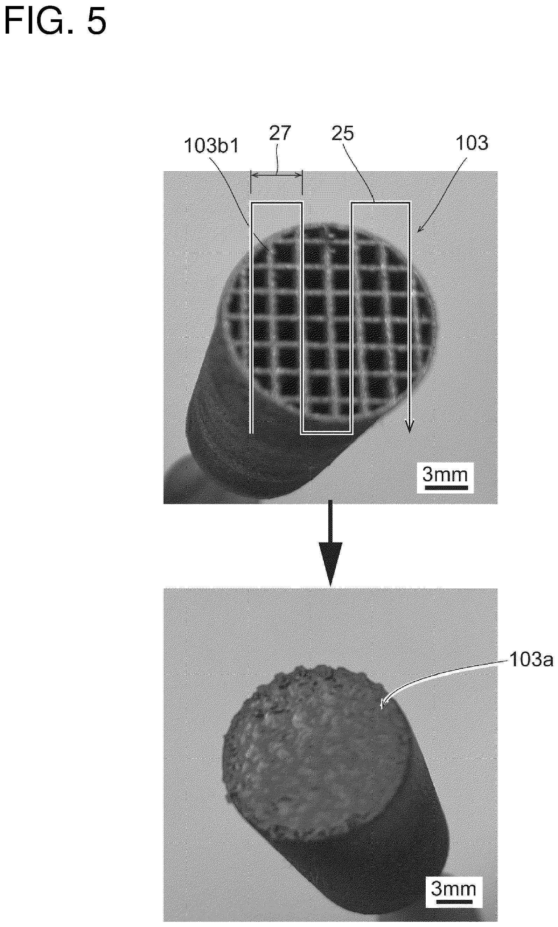

As shown in FIG. 5, a workpiece 103 made of Ti-6Al-4V alloy was manufactured by additive manufacturing using a powder bed method. The workpiece 103 has a flat support surface 103a. A support structure 103b1 is a block support. The support structure 3b was cut at 2 mm height from the support surface 103a. The support structures 103b 1 remaining on the workpiece 103 are uniformly disposed on one surface of the support surface 103a.

The ejection conditions are as follows.
Process liquid: Water
Abrasive: Alumina #150 (average particle size 70 to 100 µm)
Amount of abrasive: 30% by weight based on the process liquid
Workpiece immersion depth D2: 300 mm (see FIG. 4)
Angle 4: 20 degrees
Nozzle diameter: 0.5 mm
Ejection pressure: 130 MPa
Feed speed: 0.3 mm/s
Nozzle offset D1: 50 mm (see FIG. 4)
Nozzle moving path: Path 25 (see an upper photo of FIG. 5) for scanning while folding back on a plurality of parallel lines having a spacing 27
Spacing 27: 4 mm
Number of passes: 7

The surface of the workpiece 3 before and after the liquid ejection was photographed by an optical microscope. The optical microscope utilized a Keyence VXH-6000. Further, the surface residual stress of the workpiece 3 before and after the liquid ejection was measured by an X-ray stress measurement method (cos α method). The X-ray stress measuring device utilized the Pulsetec Industrial Co. Ltd µ-X360s portable X-ray residual stress measuring device. The residual stress was measured for a plurality of specific portions of the workpiece 3.

### Results

Photographs before and after the cavitation processing on the support surface 103a of the workpiece 3 of the present example are shown in FIG. 5. The upper photo in FIG. 5 is pre-processing. The lower photo in FIG. 5 is after processing. In the present example, the support structures 103b remaining on the workpiece 103 were effectively removed. The surface residual stresses after the processing of this example were -205 MPa.

### Second Example

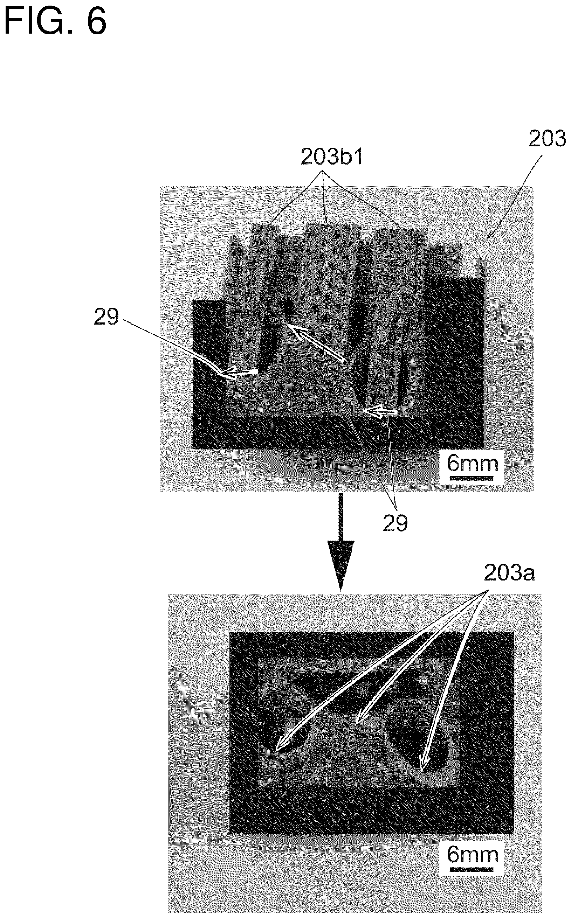

As shown in FIG. 6, a workpiece 203 made of a Ti-6Al-4V alloy was manufactured by additive manufacturing using a powder bed method. The workpiece 203 is a surgical implant. The workpiece 203 has a mesh structure. The workpiece 203 also has a support structure 203b1 therein. The support structure 203b1 is a rod support. The workpiece 203 is generally rounded. The height, width, and thickness of the support structures 203b1 vary from one support structure 203b1 to another. The dimensions of the support structure 203b1 remaining in the workpiece 3 are, for example, as follows.
Width (left-right direction in FIG. 6): 6 to 10 mm (differ for each part)
Thickness (perpendicular to the page in FIG. 6): 1 mm
Height 3b2: 25 to 30 mm (varies by site)

The workpiece 3 was installed in the processing tank 11 so that the support structure 203b1 extends horizontally. The nozzle 15 was installed downward. That is, the support surface 203a is substantially parallel to the ejection axis 15a. The liquid ejection processing was performed on the workpiece 203 under the following ejection conditions.
Angle 4: 0 to 20 degrees (varies by site)
Feed speed: 1 mm/s
Nozzle travel path: path 29 through the vicinity of the boundary between the support structure 203b 1 and the workpiece 203 (upper photo in FIG. 6)
Number of passes: 1
Other conditions are the same as in the first example.

### Results

Photographs before and after the cavitation processing for the workpiece 203 according to the present example are shown in FIG. 6. The upper photo in FIG. 6 is pre-processing. The lower photo in FIG. 6 is after processing. In this example, the support structures 203b 1 remaining on the workpiece 203 were effectively removed. The support structures 203b 1 fell into a large lump inside the tank. The surface residual stresses after the processing of the present example were -205MPa.

Removal of the support structure is believed to proceed as follows. First, the support structure 203b 1 is broken in the vicinity of the support surface 203a and separated from the workpiece 203 by the kinetic energy of the abrasive and the process liquid. Next, the support structure 203b 1 remaining on the support surface 203a is removed by the flow of the abrasive, the dynamic pressure of the process liquid, and the impact force caused by the collapse of the cavity.

The present invention is not limited to the above-described embodiments, and various modifications can be made without departing from the gist of the present invention, and all technical matters included in the technical idea described in the claims are the subject of the present invention. While the above embodiments have been shown by way of example, those skilled in the art will recognize that various alternatives, modifications, variations, and improvements can be made from the disclosure herein, which fall within the scope of the appended claims.

### Reference Signs List

- 1: Process liquid
- 2: Abrasive
- 3: Workpiece
- 3a: Support surface
- 3b, 3b1: Support structure
- 6: Jet
- 15: Nozzle

## Claims

1. A method for removing support structure, comprising:
suspending abrasive (2) into a process liquid (1);
cutting a support structure (3b) along a cutting surface (9) from an additively manufactured workpiece (3) having a support surface (3a), the support surface (3a) including the support structure (3b) for fixing the workpiece (3) to a build platform;
installing the workpiece (3) with the support structure (3b) remaining on the support surface (3a) in the process liquid (1) with suspended abrasive (2);
immersing a nozzle (15) for ejecting a cavitation jet (6) of the process liquid (1) into the process liquid (1); and
ejecting the cavitation jet (6) onto the workpiece (3) from the nozzle (15) immersed in the process liquid (1) such that an angle between an ejection axis (15a) of the cavitation jet (6) ejected from the nozzle (15) and the support surface (3a) is between 0 to 20 degrees to remove the remaining support structure (3b) adhered to the workpiece (3).

2. The method for removing support structure according to claim 1, wherein the nozzle (15) ejects the process liquid (1) in a direction between in a vertically downward direction and in a horizontal direction.

3. The method for removing support structure according to claim 1 or 2, wherein
a compressive residual stress is applied to a surface of the workpiece (3).

4. The method for removing support structure according to any one of claims 1 to 3, wherein
the workpiece (3) has a mesh structure.

5. The method for removing support structure according to any one of claims 1 to 4, wherein
the angle between the ejection axis (15a) and the support surface (3a) is between 10 to 20 degrees.
